# EUROPÄISCHE PATENTSCHRIFT

(11) **EP 2 388 412 B1**
(45) Veröffentlichungstag und Bekanntmachung des Hinweises auf die Patenterteilung: **16.01.2019**
(21) Anmeldenummer: 11004185.2
(22) Anmeldetag: 20.05.2011
(51) Int. Cl.: E04H 17/14, B23K 26/00, E06B 11/02, B23K 26/38, B23K 26/40, B23K 31/02, B23K 101/24, B23K 101/28, B23K 103/04, B23K 103/10

(54) **Rahmenteil**
Frame section
Elément de cadre

(30) Priorität: 21.05.2010 DE 102010022180
(43) Veröffentlichungstag der Anmeldung: 23.11.2011
(73) Patentinhaber: MASCH-TEC Marita Schürmann e.K., 33397 Rietberg (DE)
(72) Erfinder: Schürmann, Adrian, 33332 Gütersloh (DE)
(74) Vertreter: Habenicht, Wieland

(56) Entgegenhaltungen:
- EP-A1- 0 634 536
- DE-U1- 29 721 660
- NL-C1- 1 032 886
- US-A1- 2005 189 532

## Beschreibung

Die Erfindung betrifft ein Rahmenteil, insbesondere ein freitragendes Rahmenteil.

Seit vielen Jahrzehnten gibt es eine große Vielzahl an Rahmenteilen, die üblicherweise hergestellt werden aus länglichen, profilartigen sogenannten Obergurtelementen und Untergurtelementen, die wiederum mit dazwischen angeordneten länglichen sogenannten Füllstabelementen verschweißt oder verschraubt verbunden sind. Dabei stehen die Füllstabelemente direkt auf den Innenseiten, also auf den füllstabzugewandten Seiten der Obergurt- und Untergurtelemente. Insbesondere freitragende Rahmenteile, insbesondere Hoftore, insbesondere Dreh- und Schiebetore, aber auch Zaunelemente, verwinden sich im Laufe der Zeit aufgrund der hohen angreifenden Kräfte. Diese Kräfte schädigen zumindest langfristig solche Rahmenteile, wobei in vielen Fällen Brüche an vorhandenen Schweißstellen auftreten oder bei verschraubten Elementen die Verschraubungselemente sich langsam lösen. Dabei nimmt die dynamische wie statische Belastbarkeit dramatisch ab, bis hin zur Zerstörung der Rahmenteile, insbesondere Tore und Zäune.

DE 198 30 972 C2 offenbart insbesondere ein Zaunfeld oder Torflügel mit vertikalen und horizontalen metallenen Stangenelementen, die an Schnittpunkten miteinander verbunden sind und von denen die horizontalen Stangenelemente aus U-ProfilStäben bestehen, deren U-Rinne aus einem Rücken und zwei Schenkeln besteht und nach unten offen ist und die im Rücken unter gegenseitigem Abstand angeordnet, an die Querschnittsform der vertikalen Stangenelemente angepasste Ausschnitte aufweist, durch die die vertikalen Stangenelemente hindurchgesteckt sind, deren Innen-Querabmessung im U-Profil zumindest über einen Teil der Schenkelhöhe der Querdimension der vertikalen Stangenelemente mit kleinem Spiel entspricht und die an den beiderseitigen Schenkeln des U-Profils gegen ein Neigen in der U-Profil-Rinne festgelegt sind, wobei die Innen-Querabmessung der U-Profil-Rinne zwischen den Schenkeln im Bereich des Rinnengrundes ausgehend vom Rücken eine in der Stangenelement-Längsrichtung verlaufende Erweiterung aufweist, die über die Dimension des vertikalen Stangenelements in der Querrichtung hinausgeht. Nachteilig hierbei ist jedoch, daß es sich um eine nach unten hin offene Konstruktion handelt, die entgegengesetzt zu geschlossenen Stangenelementen nicht gänzlich so hohe dynamische Belastbarkeiten aufweisen.

EP 0 634 536 A1 offenbart Rahmenteile, die im wesentlichen aus horizontal und vertikal sich erstreckenden stangenförmigen Elementen bestehen, wobei die Elemente miteinander durch Materialverquetschungen verbunden sind, wobei jedoch auch hier auf Dauer die stangenförmigen Elemente untereinander sich lösen können.

US 2,575,965 offenbart insbesondere Verbindungen von röhrenförmigen Strukturen, bei denen die in röhrenförmigen Elementen aufgenommenen Elemente derart mechanisch umgeformt sind, daß diese in entsprechende Materialausnehmungen eingesetzt werden können, um eine sichere Fixierung beim entsprechenden Einlöten zu erhalten. Nachteilig hieran ist jedoch, daß solche Umformungen sehr zeit- und somit kostenintensiv sind. Darüber hinaus erfordert es eine sehr hohe Genauigkeit der Anordnung von am längsaxialen Ende eines röhrenförmigen Elementes ausgebildeten Eingriffselementes und der entsprechenden Materialausnehmung, so daß in der Praxis häufig viele händische Korrekturen notwendig sind, damit die röhrenförmigen Elemente ineinander exakt festsitzen, was auch mit einem hohen Zeit- und somit Kostenaufwand verbunden ist.

US 3,073,627 offenbart Verbindungen von röhrenförmigen Elementen, die mittels eines Adapters verbunden werden, wobei der Adapter dazu dient, daß entsprechende Fixierungen wie beispielsweise Verschraubungen überhaupt erst ermöglicht werden. Auch dies ist ein relativ aufwendiges Verfahren und ist somit relativ kostenintensiv.

In EP 0 634 536 A1 wird ein Rahmenteil offenbart, mit
a) einem Obergurtelement;
b) und einem Untergurtelement;
c) und einem Füllstabelement, wobei das Füllstabelement mit dem Obergurtelement und dem Untergurtelement verbunden ist;
d) das Füllstabelement an der Füllstabelement zugewandten Seite sich durch eine Materialausnehmung des Obergurtelementes und des Untergurtelementes erstreckt;
f) wobei das Füllstabelement an einem längsaxialem Ende abgeschrägt ist;
g) wobei ein Obergurtelement oder Untergurtelement mit Füllstabelement fixierender Verbindung an der Füllstab-element zugewandten Seite an Ober- und Untergurtelement realisiert ist;
h) wobei das Füllstabelement an seinem abgeschrägten, längsaxialem Ende umformungsfrei in einer auf einer dem Füllstabelement abgewandten Seite des Obergurtelementes bzw. des Untergurtelementes aufliegt.

Nachteilig hierbei ist die Tatsache, dass dadurch die statischen sowie dynamischen mechanischen Belastungseigenschaften der an der Füllstabelement zugewandten Seite sich über einen längeren Zeitraum unkontrolliert verändern können, wobei gleichzeitig auch eine höhere Temperaturabhängigkeit durch eine Veränderung dieser Eigenschaften festzustellen ist, sodass es im Laufe der Zeit auch zu Lockerungen zwischen Füllstabelement und Obergurt- bzw. Untergurtelement kommen kann.

NL 103 288 6 C1 offenbart ein Rahmenteil mit,
a) einem Obergurtelement;
b) und einem Untergurtelement;
c) einem Füllstabelement, wobei das Füllstabelement mit dem Obergurtelement und dem Untergurtelement verbunden ist;
d) wobei das Füllstabelement sich an der Füllstabelement zugewandten Seite zumindest teilweise durch mindestens eine Materialausnehmung des Obergurtelementes oder des Untergurtelementes erstreckt;
e) wobei eine Obergurtelement oder Untergurtelement mit Füllstabelement fixierender Verbindung im Bereich zwischen Füllstabelement abgewandter und Füllstabelement zugewandter Seite an Ober- und Untergurtelement realisiert ist; wobei das Füllstabelement an einem längsaxialen Ende abgeschrägt ist.

Die Verbindung von Füllstabelement und Gurt-element wird in NL 103 288 6 C1 entweder mit Hilfe von weiteren Hilfsmitteln in Form von Klemmen, Klemmbändern oder Metallstreifen in den jeweiligen Hohlräumen der Obergurt- und Untergurtelemente zwischen den Innenseite von Obergurt- bzw. Untergurtelement und mechanischen Einkerbungen des Füllstabelementes realisiert.

Eine weitere Ausführungsform von NL 103 288 6 C1 ist eine solche, bei der in Materialauslassungen des Füllstabelementes, die in einem jeweiligen Hohlraum eines Obergurtelementes bzw. Untergurtelementes angeordnet sind, nach einer Umformung des Obergurtelementes bzw. Untergurtelementes das Füllstabelement eingeklemmt wird bzw. zwischen zwei entsprechenden Material-ausnehmungen aufläuft.

Nachteilig bei den Ausführungsformen in NL 103 288 6 C1 ist die Tatsache, dass zum einen nicht unerheblich viel zusätzliches Material aufgrund der zu verwendenden Klemmhilfsmittel das Gewicht des Rahmenteils erheblich erhöht und zum anderen aufgrund der Umformung des Ober- bzw. Untergurtelementes die mechanischen, dynamischen und statischen Belastbarkeiten - neben der erhöhten Temperaturabhängigkeit - häufig nicht über einen längeren Zeitraum konstant und somit die Verbindungen nicht stabil genug sind.

DE 297 21 660 U1 offenbart ein Bausystem mit, lösbaren und / oder kraftschlüssigen Eingriff zueinander stehenden Bauelementen, insbesondere für Geländer, Brüstungen, räumlichen Abgrenzungen von Rankgittern und / oder von Sicht- bzw. Wetterschutzwänden, wobei die einzelnen Bauelemente eine Fußleiste, eine Zwischenwand, Pfosten und eine Abschlussleiste zum formschlüssig fixierendem, selbsttragfähigen Eingriff, mit Nuten und / oder Stegen aufweisen.

US 2005/0189532 A1 offenbart ein Zaunstrebensystem, bei dem die einzelnen Streben verbunden werden durch Ineinanderschieben einzelner Streben durch Durchführen von zu verbindenden Streben ineinander, wobei Materialdornen durch Öffnungen, die sich an den jeweiligen Enden der zu verbindenden Streben befinden, das ganze fixierend geführt sind.

Aufgabe der vorliegenden Erfindung ist es daher, Rahmenteile, insbesondere freitragende Rahmenteile, bereitzustellen, die die oben genannten Nachteile nicht aufweisen, insbesondere dahingehend, daß die Rahmenteile sich im Laufe der Zeit nicht lockern und eine hohe Stabilität und Belastbarkeit aufweisen und im Idealfall quasi wartungsfrei und darüber hinaus kostengünstig herzustellen sind.

Diese Aufgabe wird gelöst durch ein Rahmenteil nach Anspruch 1, ein Verfahren nach Anspruch 6 sowie Verwendungen nach den Ansprüchen 7 bzw. 8.

Das erfindungsgemäße Rahmenteil, insbesondere als freitragendes Rahmenteil, insbesondere als Tor oder Zaun, weist auf:
a. mindestens ein Obergurtelement
   und/oder
   mindestens ein Untergurtelement,
   und
b. mindestens ein Füllstabelement, wobei das Füllstabelement mit dem Obergurtelement und/oder dem Untergurtelement verbunden ist.

Das Füllstabelement an der füllstabzugewandten Seite erstreckt sich zumindest teilweise durch mindestens eine Materialausnehmung des Obergurtelementes und/oder des Untergurtelementes.

Die füllstabelementzugewandte Seite des Ober- oder Untergurtelementes ist die Seite, die quasi zum Füllstabelement hin weist. Die füllstabelementabgewandte Seite des Ober- oder Untergurtelementes ist die Seite, die zumindest nicht zum Füllstabelement hin weist. Bei rechteckförmigen profilartigen Ober- oder Untergurtelementen ist die füllstabelementabgewandte Seite die Seite, die gegenüber der füllstabelementzugewandten Seite angeordnet ist. Bei beispielsweise dreieckförmigen profilartigen Ober- oder Untergurtelementen gibt es eine füllstabelementzugewandte Seite und zwei füllstabelementabgewandte Seiten.

Mit erfindungswesentlich ist die Tatsache, daß das Füllstabelement an der füllstabelementzugewandten Seite sich zumindest teilweise und besonders vorteilhaft vollständig durch mindestens eine Materialausnehmung, beispielsweise durch ein Loch, in welcher Form auch immer, wie beispielsweise rund, rechteckig, dreieckig etc., des Ober- und/oder des Untergurtelementes erstreckt. Durch diese Ausgestaltung ist es nunmehr möglich, eine Führung des Füllstabelementes zu realisieren, da die Materialstärke des Ober- oder Untergurtelementes quasi als Widerlager fungiert. Das Füllstabelement steckt sozusagen im Ober- und/oder Untergurtelement. Bei einer Realisierung der Gurtelemente als Profilelement ist es weiterhin erfindungsgemäß, wenn eine fixierende Verbindung, die Obergurtelement oder Untergurtelement mit dem Füllstabelement verbindet, an der füllstabelementabgewandten Seite an Ober- oder Untergurtelement realisiert ist, beispielsweise und vorteilhafterweise zugleich - da in der Praxis als zuverlässig erprobt - mittels Verschweißen und/oder Verschrauben. Die fixierende Verbindung kann auch an der füllstabelementzugewandten realisiert sein, wobei erfindungsgemäß an der füllstababgewandten Seite des Obergurt- oder UntergurtElementes eine solche fixierende Verbindung realisiert ist.

Eine solche Ausgestaltung ist besonders vorteilhaft in ihren mechanischen Eigenschaften, da durch die Führung des Füllstabelementes in der füllstabelement-zugewandten Seite in Kombination mit einer Verschraubung oder Verschweißung auf der füllstabelementabgewandten Seite des Ober- oder Untergurtelementes eine von den Hebelkräften aus gesehen besonders hoch belastbare Ausführung realisierbar ist.

Weiterhin ist es erfindungsgemäß, wenn das Füllstabelement an mindestens einem längsaxialen Ende abgeschrägt ist, insbesondere wenn das Füllstabelement an seinem abgeschrägten Ende in einer auf der füllstabelement-abgewandten Seite des Obergurtelementes und/oder des Untergurtelementes angeordneten Materialausnehmung mit dem Obergurtelement und/oder mit dem Untergurtelement verbunden ist, da dieses dann durch das Obergurtelement oder Untergurtelement hindurchgeführt und somit geführt wird, was letztlich zu einer sehr hohen Verzugssicherheit des Rahmenteils führt. Die Abschrägung ist derart, daß das Füllstabelement an seinem abgeschrägten, längsaxialen Ende umformungsfrei, also ohne eine in der Regel vorherige insbesondere und beispielsweise bördelnde Umformung, in der Materialausnehmung angeordnet ist. Entscheidend ist, daß - im Längsquerschnitt des Füllstabelementes gesehen - durch vorheriges Ablängen an einer Seite des längsaxialen Endes des Füllstabelementes über die Tiefe der Materialausnehmung des Gurtelementes Material des Füllstabelementes zur Verfügung steht, um in der Materialausnehmung angeordnet werden zu können, um vorteilhafterweise dann - bereits relativ festsitzend - verschweißt und/oder verschraubt zu werden. Unter umformungsfrei ist zu verstehen, daß in diesem Fall das Füllstabelement nicht gezielt plastisch in eine andere Form gebracht wird. In der Regel wird das Füllstabelement schräg abgelängt, so daß eben keine plastische Formänderung vorliegt. Würde man beispielsweise das Füllstabelement an einem längsaxialen Ende an zwei Seiten schräg ablängen, so daß dann im Längsquerschnitt eine Materialspitze sogar mittig angeordnet sein kann, müßte man das Materialspitzen-Material nach innen umbördeln, um in der Tiefe des Füllstabelementes überhaupt ausreichend Material zur Verfügung zu haben, das sich zur Fixierung in eine zur Füllstabelement abgewandten Materialausnehmung bringen läßt.

Insbesondere ist es vorteilhaft, wenn sich die Abschrägung über die Breite des Füllstabelementes erstreckt, da es sich hierbei um eine leicht und schnell herstellbare Ausführungsform handelt, nämlich eine, die mittels schrägen Ablängens hergestellt wird.

Eine Verschweißung lediglich mit beispielsweise und insbesondere einer Schweißnaht - es könnte auch ein Schweißpunkt sein -, führt selbstredend zu einer Kostenersparnis, da die Notwendigkeit mehrerer Befestigungen häufig entfällt, da durch die innere Führung das Rahmenteil entsprechend verwindungsfest wird. Bei kurzen Schweißnähten wird bei insbesondere freitragenden Rahmenteilen die Gefahr eines Verzugs ebenfalls reduziert. Weiterhin vorteilhaft ist es, daß durch die Abschrägung des Füllstabelementes dieses bei einer anschließenden Verzinkung das flüssige Zink schneller ablaufen kann und daher das frisch verzinkte Rahmenteil beim Herausziehen aus dem Zinkbad schnell an Gewicht verliert, was die Verzugsgefahr für das Rahmenteil ebenfalls in nicht unerheblichem Maße erniedrigt. Entsprechendes gilt auch für Verschraubungen. Selbstverständlich ist es möglich, daß neben der füllstabelement-abgewandtseitig realisierten Verbindung auch eine füllstabelement-zugewandtseitig realisiert ist, beispielsweise in Form einer Verschweißung zwischen Füllstabelement und Ober- oder Untergurtelement. Eine solche Ausführungsform ist besonders verzugsresistent.

Verschweißungen und Verschraubungen haben sich in der Praxis bewährt und sind daher vorteilhafte Ausführungsformen für das Verbinden des Füllstabelementes.

Schließlich ist es vorteilhaft, da bewährt, daß das Füllstabelement und/oder das Obergurtelement und/oder das Untergurtelement metallischer Natur ist, beispielsweise und insbesondere wenn diese aus Stahl, Aluminium, Stahllegierungen oder Aluminiumlegierungen bestehen.

Das erfindungsgemäße Verfahren zur Herstellung eines erfindungsgemäßen Rahmenteils ist dadurch gekennzeichnet, daß die mindestens eine Materialausnehmung, beispielsweise und insbesondere ein Rundloch oder Langloch, realisiert wird mittels eines Lasers. Dank der Lasertechnologie ist es möglich, relativ freie Materialausnehmungs-Geometrien zu realisieren. Dies ist in relativ kurzer Zeit möglich, so daß die Erstellung solcher Materialausnehmungen recht kostensparend durchgeführt werden kann.

Somit wird die Verwendung eines Lasers zur Herstellung eines erfindungsgemäßen Rahmenteils beansprucht.

Schließlich wird die Verwendung eines erfindungsgemäßen Rahmenteils als Tor, Zaun, Trägerrahmen, beispielsweise für Maschinen, beansprucht.

Die Erfindung wird anhand der nachfolgenden Figuren nicht beschränkend beschrieben, wobei:
Fig. 1a eine Verschraubungsausführungsform aus dem Stand der Technik zeigt;
Fig. 1b - einen vergrößerten Ausschnitt aus Figur 1a zeigt;
Fig. 2a - eine Verschweißungsausführungsform aus dem Stand der Technik zeigt;
Fig. 2b einen vergrößerten Ausschnitt aus Figur 2a zeigt;
Fig. 3a eine erfindungsgemäße Verschweißungsform zeigt;
Fig. 3b - eine Detaildarstellung des in Figur 3a dargestellten zeigt;
Fig. 3c - eine Aufsicht des in Figur 3b dargestellten zeigt;
Fig. 4a - eine erfindungsgemäße Verschraubungsform zeigt;
Fig. 4b einen vergrößerten Ausschnitt aus Figur 4a zeigt;
FIG. 5a eine ausschnittweise Darstellung einer weiteren erfindungsgemäßen Ausführungsform zeigt;
FIG. 5b - eine weitere, alternative Ausführungsform zu der in Figur 5a gezeigten zeigt;
FIG. 6a - eine perspektivische Darstellung einer weiteren und zu der in den Figuren 4a und 4b abgeänderten Ausführungsform zeigt;
FIG. 6b einen vergrößerten Ausschnitt aus Figur 6a zeigt.

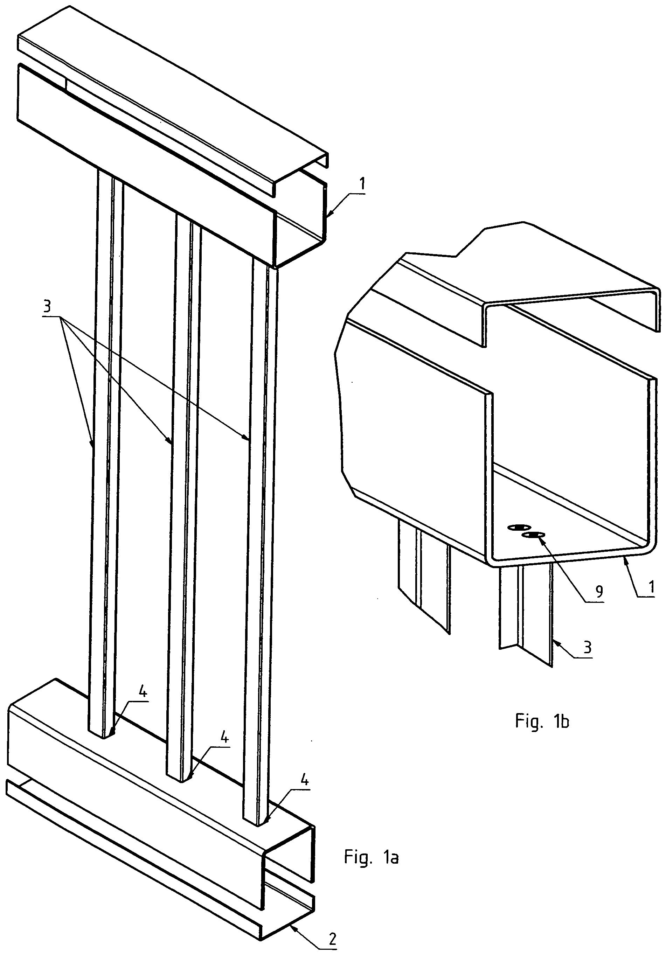

In den Figuren 1a und 1b ist eine bisher übliche Ausführungsform eines Rahmenteils gezeigt, bei dem einzelne Füllstabelemente 3 jeweils mit jeweils zwei Schrauben 9 an einem Obergurtelement 1 und einem Untergurtelement 2 befestigt sind. Die Füllstabelemente 3 sind mittels Schrauben, die in (nicht gezeigte) Schraubkanäle eingeschraubt sind, jeweils formstabelementzugewandt-seitig 4 mit dem Obergurtelement 1 und dem Untergurtelement 2 verbunden. Daher ist eine solche Konstruktion bezüglich ihrer Verwindungsfestigkeit stark abhängig vom sicheren Sitz der Schrauben in den Schraubkanälen der Ober- und Untergurtelementen. Bei geringster Lockerung der Schrauben macht sich dies sehr negativ bemerkbar bezüglich einer Herabsetzung der dynamischen wie statischen Belastung.

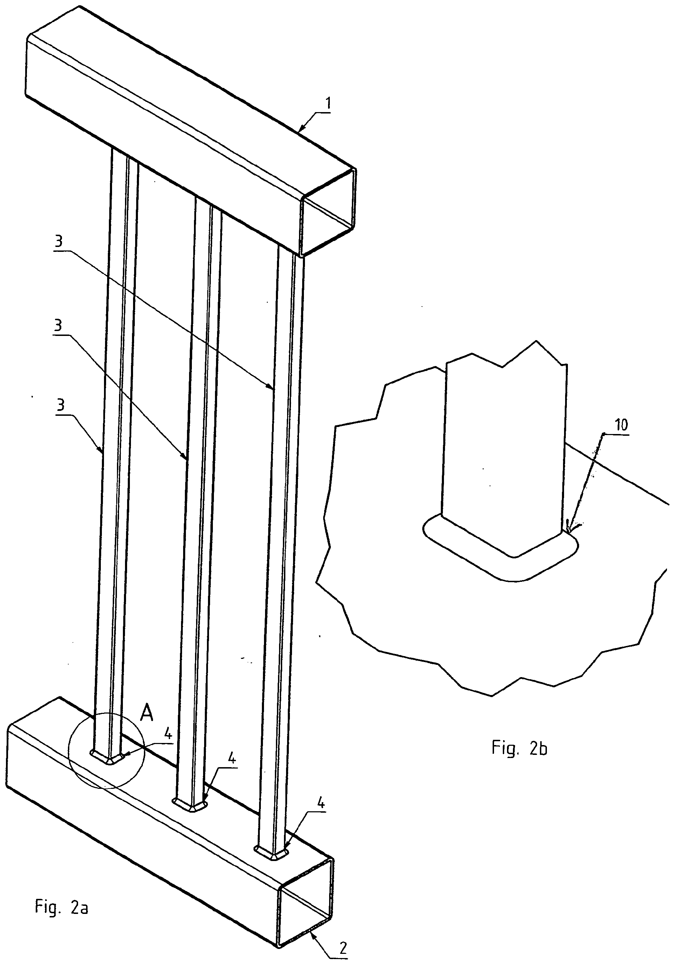

Entsprechendes gilt auch für die Ausführungsformen der in den Figuren 2a und 2b gezeigten verschweißten Elemente. Hier sind die Füllstabelemente 3 jeweils an Ober-1 und Untergurtelement 2 über Schweißnähte 10 verschweißt. Hier kann es statt Lockerungen der Verschraubungen zu partiellen bis vollständigen Ablösungen der Schweißnähte 10 kommen, so daß ein schnelles und gefährliches Materialversagen eintreten kann bei zu hohen dynamischen wie statischen Belastungen der Rahmenteile.

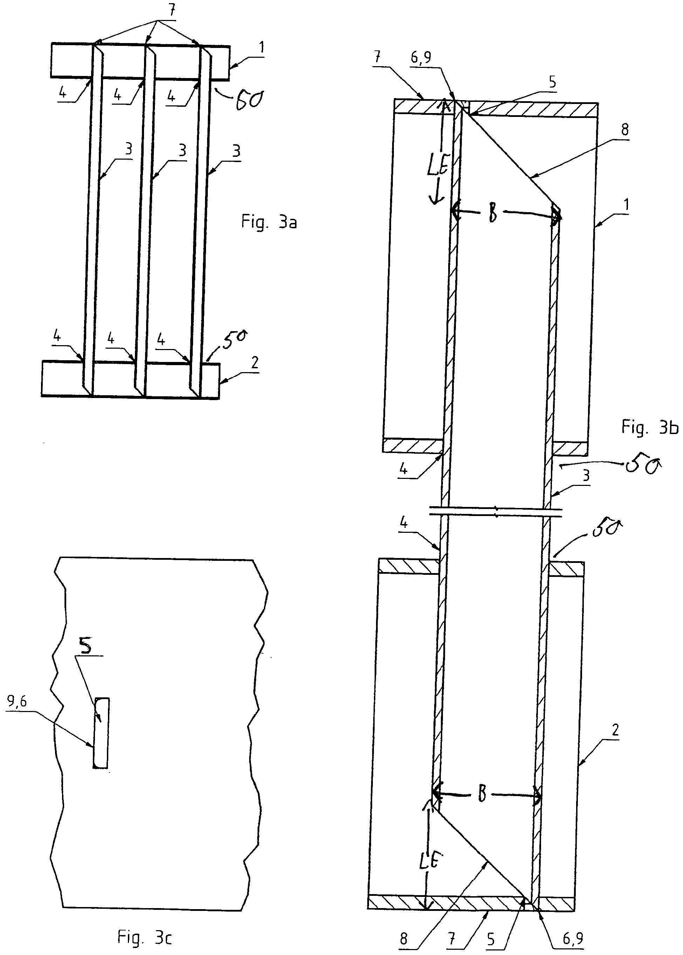

In den Figuren 3a, 3b und 3c ist eine erfindungsgemäße verschweißte Ausführungsform zu erkennen, bei der mehrere Füllstabelemente 3 durch (nicht gezeigte) rechteckförmige Materialausnehmungen durchgesteckt sind, die jeweils einen Querschnitt aufweisen, der dem der Füllstabelemente 3 entspricht. Durch das Hindurchführen der Füllstabelemente 3 erhalten diese eine erhebliche seitliche Führung im Bereich der Materialstärke des jeweiligen Gurtelementes 1, 2, so daß in Verbindung mit der nahtartigen Verschweißung 9 als fixierende Verbindung 6 im Bereich der Materialausnehmung 5 in der Materialstärke des jeweiligen Gurtelementes 1, 2 eine sehr verwindungssteife Konstruktion entsteht. Um möglichst optimale Hebelverhältnisse zu erhalten, erfolgt die Verschweißung auf der dem Füllstabelement 3 abgewandten Seite 7 des Obergurtelementes und des Untergurtelementes. Zusätzlich kann im Berührungsbereich zwischen Füllstabelement 3 und jeweiligem Gurtelement 1, 2 an der füllstabelement-zugewandten Seite 4 eine Verschweißung (nicht gezeigt) realisiert sein zur zusätzlichen Fixierung und gleichzeitigen Abdichtung der Gurtelemente 1, 2. Bei dieser Ausführungsform sind die beiden Enden eines jeden Füllstabelementes 3 mit einer Schräge 8 versehen, was beim Verzinken dazu führ, das dieses schneller beim Herausnehmen aus einem diesbezüglichen Zinkbad aus dem Füllstabelement 3 herausfließt, so daß eine Verzugsgefahr für das jeweilige Rahmenteil erheblich reduziert wird. Die Materialausnehmungen werden mittels eines Lasers herausgeschnitten.

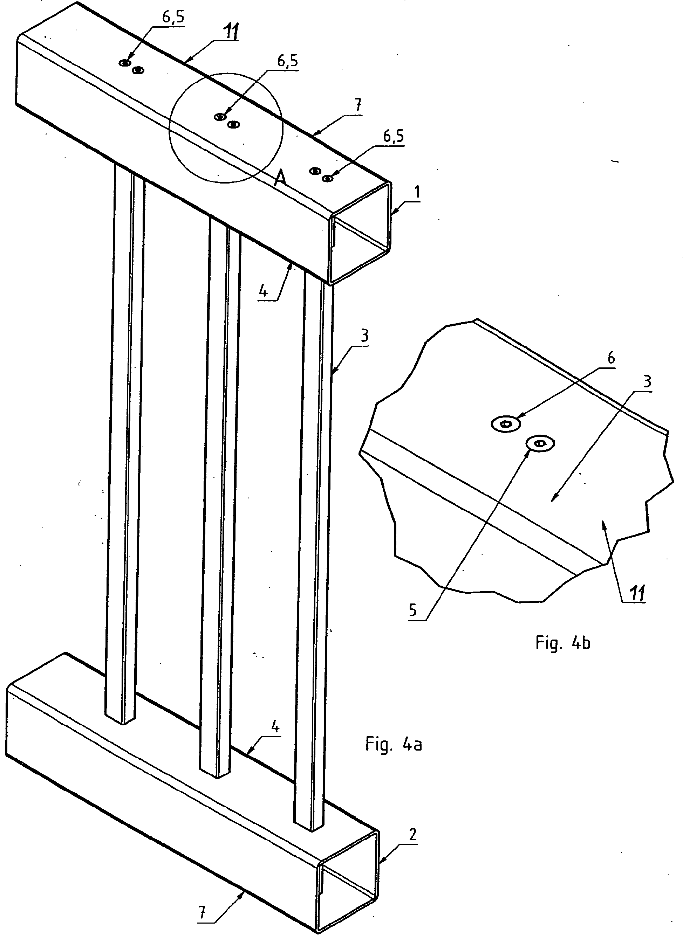

Entsprechendes gilt auch für die Ausführungsform der in den Figuren 4a und 4b gezeigten verschraubten Elemente. Hier sind die Füllstabelemente 3 jeweils an Ober-1 und Untergurtelement 2 über Verschraubungen 11 - jeweilige Verbindungen 6 bildend - fixierend verbunden. Die Verschraubungen 11 befinden sich jeweils auf der füllstabelement-abgewandten Seite 7. Auch hier werden die Füllstabelemente 3 seitlich geführt durch die Materialstärken der Ober- 1 und Untergurtelemente 2.

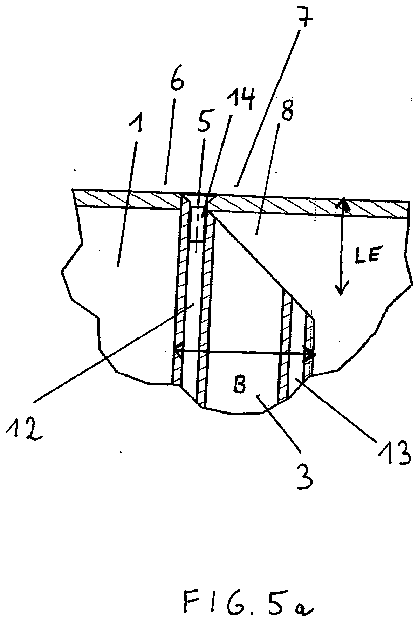

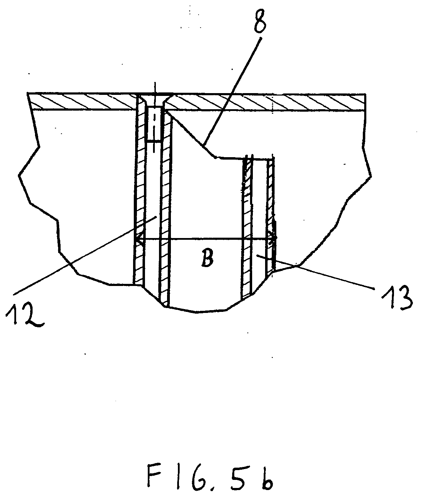

In den Figuren 5a und 5b sind zwei beispielhafte Ausführungsformen zu erkennen in Bezug auf die gebildeten Abschrägungen/Schrägen 8, aus denen zu erkennen ist, daß die Abschrägung 8 sich gänzlich - und dies dürfte in der Praxis die am häufigsten ausgeführte Ausführungsform sein, da am einfachsten herzustellen - als auch nur teilweise über die radiale Breite B sich erstrecken kann, wobei es erfindungsgemäß lediglich darauf ankommt, daß eine Abschrägung 8 überhaupt gegeben ist, so daß quasi das längsaxiale Ende der Abschrägung 8 in der Materialausnehmung angeordnet werden kann, um dann entsprechend - falls gewünscht, und dies dürfte häufig der Fall sein - weiter fixiert wird, beispielsweise und insbesondere mittels Verschraubung und/oder Verschweißung, wobei in den Figuren 5a und 5b entsprechende Verschraubungen aufgezeigt sind. Darüber hinaus weist das in den Figuren 5a und 5b aufgezeigte Füllstabelement 3 zwei Hohlraumkanäle 12, 13 auf, wobei eine Schraube 14 im Hohlraumkanal 12 schraubend eingelassen ist zur weiteren und sicheren Fixierung des Füllstabelementes 3 mit dem Obergurtelement 1.

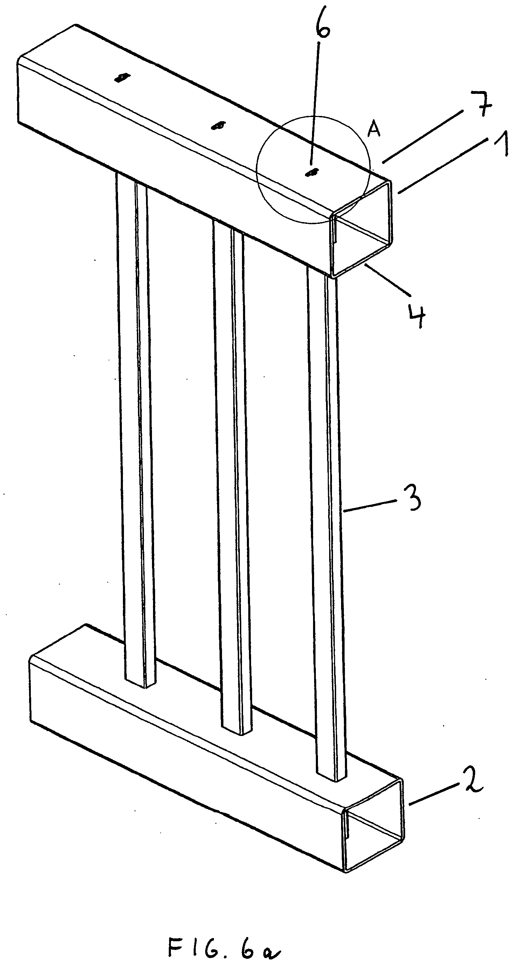

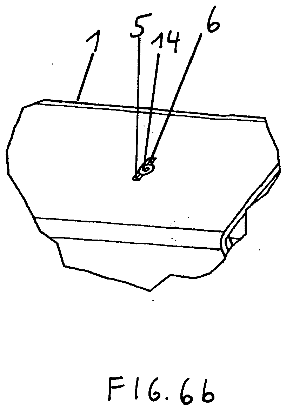

In den Figuren 6a und 6b ist in perspektivischer Ansicht die in der Figur 5a dargestellte Ausführungsform zu erkennen, wobei der entsprechende Hohlraumkanal 12 quasi in Bezug auf die Tiefe des rechteckförmigen Füllstabelementes 3 fast mittig angeordnet ist, so daß die Schraube 14 beim entsprechend verschraubenden Fixieren diese quasi in der Mitte der schlitzförmigen Ausnehmung 5 angeordnet ist.

## Patentansprüche

1. Rahmenteil,
a) mit mindestens einem Obergurtelement (1)
und/oder
mindestens einem Untergurtelement (2),
und
b) mindestens einem Füllstabelement (3),
wobei das Füllstabelement (3) mit dem Obergurtelement (1) und/oder dem Untergurtelement (2) verbunden ist, wobei das Füllstabelement (3) an der füllstabelement-zugewandten Seite (4) sich zumindest teilweise durch mindestens eine Materialausnehmung (50) des Obergurtelementes (1) und/oder des Untergurtelementes (2) erstreckt, wobei mindestens eine Obergurtelement (1) oder Untergurtelement (2) mit Füllstabelement (3) fixierende Verbindung (6) an der füllstabelement-abgewandten Seite (7) an Ober(1)- und/oder Untergurtelement (2) realisiert ist, wobei das Füllstabelement (3) an mindestens einem längsaxialen Ende (LE) abgeschrägt ist, **dadurch gekennzeichnet, dass** das Füllstabelement (3) an seinem abgeschrägten, längsaxialen Ende (LE,8), umformungsfrei in einer auf der füllstabelement-abgewandten Seite (7) des Obergurtelementes (1) und/oder des Untergurtelementes (2) angeordneten Materialausnehmung (5) angeordnet, mit dem entsprechenden Gurtelement (1), (2) verbunden ist.

2. Rahmenteil nach Anspruch 1, **dadurch gekennzeichnet, daß** mindestens ein Obergurtelement (1) oder Untergurtelement (2) mit Füllstabelement (3) fixierende Verbindung (6) an der Füllstabelement-zugewandten Seite (7) an Obergurtelement(1) und/oder Untergurtelement (2) realisiert sind bzw. ist.

3. Rahmenteil nach einem der Ansprüche 1 bis 2, **dadurch gekennzeichnet, daß** die Schräge (8) sich über die radiale Breite (B) des Füllstabelementes (3) erstreckt.

4. Rahmenteil nach einem der Ansprüche 1 bis 3, **dadurch gekennzeichnet, daß** die Verbindung (6) zwischen Füllstabelement (3) und Obergurtelement (1) und/oder Untergurtelement (2) realisiert ist mittels Verschweißen und/oder Verschrauben.

5. Rahmenteil nach einem der Ansprüche 1 bis 4, **dadurch gekennzeichnet, daß** das Füllstabelement (3) und/oder das Obergurtelement (1) und/oder das Untergurtelement (2) metallischer Natur sind bzw. ist.

6. Verfahren zur Herstellung eines Rahmenteils nach einem der Ansprüche 1 bis 5, **dadurch gekennzeichnet, daß** die mindestens eine Materialausnehmung (5,50) realisiert wird mittels eines Lasers.

7. Verwendung eines Lasers zur Herstellung eines Rahmenteils nach einem der Ansprüche 1 bis 5, wobei die mindestens eine Materialausnehmung (5,50) mittels des Lasers realisiert wird.

8. Verwendung eines Rahmenteils nach einem der Ansprüche 1 bis 5 als Tor, Zaun, Trägerrahmen.

## Claims

1. Frame section,
- a) with at least one upper strap element (1) and/or at least one lower strap element (2), and
- b) at least one cross bar element (3),
- wherein the cross bar element (3) is connected to the upper strap element (1) and/or the lower strap element (2), wherein the cross bar element (3) on the cross bar element facing side (4) extends at least partly through at least one material recess (50) of the upper strap element (1) and/or the lower strap element (2), wherein at least one upper strap element (1) or lower strap element (2) with a cross bar element (3) fixing connection (6) is formed on the cross bar element non-facing side (7) on the upper (1) and/or lower strap element (2),
- wherein the cross bar element (3) is chamfered on at least one longitudinal axial end (LE),
- **characterised in that** the cross bar element (3) at its chamfered, longitudinal axial end (LE, 8), arranged without deformation in a material recess (5) arranged on the cross bar element non-facing side (7) of the upper strap element (1) and/or the lower strap element (2), is connected to the corresponding strap element (1), (2).

2. Frame section according to claim 1, **characterised in that** at least one upper strap element (1) or lower strap element (2) with a cross bar element (3) fixing connection (6) is or are formed on the cross bar element facing side (7) on the upper strap element (1) and/or lower strap element (2).

3. Frame section according to any of claims 1 to 2, **characterised in that** the diagonal (8) extends over the radial width (B) of the cross bar element (3).

4. Frame section according to any of claims 1 to 3, **characterised in that** the connection (6) between the cross bar element (3) and upper strap element (1) and/or lower strap element (2) is formed by means of welding and/or screw fastening.

5. Frame section according to any of claims 1 to 4, **characterised in that** the cross bar element (3) and/or the upper strap element (1) and/or the lower strap element (2) is or are metallic.

6. Method for producing a frame section according to any of claims 1 to 5, **characterised in that** the at least one material recess (5, 50) is formed by means of a laser.

7. Use of a laser for producing a frame section according to any of claims 1 to 5, wherein the at least one material recess (5, 50) is formed by means of the laser.

8. Use of a frame section according to any of claims 1 to 5 as a gate, fence, carrier frame.

## Revendications

1. Partie de châssis
- a) avec au moins un élément de membrure supérieur (1) et/ou au moins un élément de membrure inférieur (2), et
- b) au moins un élément d'entretoise (3),
- l'élément d'entretoise (3) étant relié avec l'élément de membrure supérieur (1) et/ou l'élément de membrure inférieur (2),
- l'élément d'entretoise (3) s'étendant, sur le côté orienté vers l'élément d'entretoise (4), au moins partiellement à travers au moins un évidement de matière (50) de l'élément de membrure supérieur (1) et/ou de l'élément de membrure inférieur (2), au moins un élément de membrure supérieur (1) ou élément de membrure inférieur (2) étant réalisé avec une liaison (6) se fixant avec l'élément d'entretoise (3) sur le côté opposé à l'élément d'entretoise (7) sur l'élément de membrure supérieur (1) et/ou l'élément de membrure inférieur (2), l'élément d'entretoise (3) étant chanfreiné au niveau d'au moins une extrémité axiale longitudinale (LE), **caractérisée en ce que** l'élément d'entretoise (3) est disposée, au niveau de son extrémité axiale longitudinale chanfreinée (LE, 8), sans déformation dans évidement de matière (5) disposé sur le côté opposé à l'élément d'entretoise (7) de l'élément de membrure supérieur (1) et/ou de l'élément de membrure inférieur (2), relié avec l'élément de membrure (1), (2) correspondant.

2. Partie de châssis selon la revendication 1, **caractérisée en ce qu'**au moins un élément de membrure supérieur (1) ou élément de membrure inférieur (2) est/sont réalisé(s) avec une liaison (6) se fixant avec l'élément d'entretoise (3) sur le côté orienté vers l'élément d'entretoise (7) sur l'élément de membrure supérieur (1) et/ou l'élément de membrure inférieur (2).

3. Partie de châssis selon l'une des revendications 1 à 2, **caractérisée en ce que** le chanfrein (8) s'étend sur la largeur radiale (B) de l'élément d'entretoise (3).

4. Partie de châssis selon l'une des revendications 1 à 3, **caractérisée en ce que** la liaison (6) entre l'élément d'entretoise (3) et l'élément de membrure supérieur (1) et/ou l'élément de membrure inférieur (2) est réalisée par soudure et/ou vissage.

5. Partie de châssis selon l'une des revendications 1 à 4, **caractérisée en ce que** l'élément d'entretoise (3) et/ou l'élément de membrure supérieur (1) et/ou l'élément de membrure inférieur (2) sont/est de nature métallique.

6. Procédé de fabrication d'une partie de châssis selon l'une des revendications 1 à 5, **caractérisé en ce que** l'au moins un évidement de matière (5, 50) est réalisé au moyen d'un laser.

7. Utilisation d'un laser pour la fabrication d'une partie de châssis selon l'une des revendications 1 à 5, l'au moins un évidement de matière (5, 50) étant réalisé au moyen du laser.

8. Utilisation d'une partie de châssis selon l'une des revendications 1 à 5 en tant que porte, clôture, barrière de support.
